# EUROPEAN PATENT SPECIFICATION

(11) **EP 2 041 757 B1**
(45) Date of publication and mention of the grant of the patent: **29.09.2010**
(21) Application number: 07789883.1
(22) Date of filing: 04.07.2007
(51) Int. Cl.: G21K 1/02, B22F 3/10

(54) **GRID FOR SELECTIVE TRANSMISSION OF ELECTROMAGNETIC RADIATION WITH STRUCTURAL ELEMENT BUILT BY SELECTIVE LASER SINTERING**
GITTER ZUR SELEKTIVEN ÜBERTRAGUNG ELEKTROMAGNETISCHER STRAHLUNG MIT EINEM DURCH SELEKTIVE LASERSINTERUNG ERZEUGTEN STRUKTURELEMENT
GRILLE POUR TRANSMISSION SÉLECTIVE D'UN RAYONNEMENT ÉLECTROMAGNÉTIQUE COMPRENANT UN ÉLÉMENT STRUCTURAL FORMÉ PAR FRITTAGE LASER SÉLECTIF

(30) Priority: 07.07.2006 EP 06116777
(43) Date of publication of application: 01.04.2009
(73) Proprietor: Koninklijke Philips Electronics N.V., 5621 BA Eindhoven (NL); Philips Intellectual Property & Standards GmbH, 20099 Hamburg (DE)
(72) Inventor: DORSCHEID, Ralf, 5656 AE Eindhoven (NL); VOGTMEIER, Gereon, 5656 AE Eindhoven (NL)
(74) Representative: Schouten, Marcus Maria
(86) International application number: PCT/IB2007/052617
(87) International publication number: WO 2008/007309

(56) References cited:
- DE-C1- 19 730 741
- US-A1- 2003 072 415
- US-B2- 7 115 336

## Description

The invention relates to the field of devices that selectively influence the composition of electromagnetic radiation that is to pass through the device, and more specifically to grid-like devices to be positioned between a source of electromagnetic radiation and a radiation-sensitive detection device.

Grids for selective transmission of electromagnetic radiation are particularly known from medical imaging devices such as CT (Computed Tomography) scanners and SPECT (Single Photon Emission Computed Tomography) devices or PET (Positron Emission Tomography) scanners. Other devices, e.g. non-destructive X-ray testing devices, may also use said grids. Such a grid is positioned between a radiation source (in a CT scanner this is an X-ray source, in SPECT/PET a radioactive isotope injected into a patient forms the radiation source) and a radiation-sensitive detection device and is used to selectively reduce the content of a certain kind of radiation that must not impinge on the radiation detection device, the reduction usually being realized by means of absorption. In a CT scanner the grid is used to reduce the amount of scattered radiation that is generated in an illuminated object, as the medical image quality deteriorates if scattered radiation is measured, as is known in the art. As today CT scanners often apply cone beam geometry, hence illuminate a large volume of an object, the amount of scattered radiation is often superior to the amount of the medical information carrying non-scattered primary radiation (e.g. scattered radiation can easily amount to up to 90% or more of the overall radiation intensity). Hence, there is a large demand for grids that efficiently reduce scattered radiation. Grids that do fulfill this demand are grids that have radiation absorbing structures in two dimensions, so-called two-dimensional anti-scatter grids (2D ASG). As such 2D ASG need to have transmission channels that are focused to the focal spot of the radiation source that emits the primary radiation that shall be allowed to transmit the grid, it is extremely costly and time-consuming to manufacture such grids.

U.S. patent No. 5,814,235 describes that a 2D ASG with focused transmission channels can be formed by aligned layering of slightly differently shaped metal foils. In order to manufacture such a grid, the various structured metal sheets need to be made, e.g. by means of lithography techniques, then the sheets need to be assembled in the correct order and finally they need to be fastened to one another. This obviously is a time-consuming and costly manufacturing process.

DE 197 30 741 C1 discloses a honeycomb structure that is fabricated by selective laser sintering and used as a lightweight carrier structure.

US 2003/072415 A discloses the manufacture of a complete two-dimensional anti-scatter grid by selective laser sintering of the absorbing walls.

US-B2-7 115 336 discloses a set-up comprising grid shaped structures that are separated by conductive plates. The grid shaped structures may be generated by e.g. selective laser sintering of layers of metal powder.

It would therefore be advantageous to have a grid for efficient selective radiation transmission and a method of manufacturing such a grid in an efficient way.

To better address one or more of these concerns, in a first aspect of the invention a grid for selective transmission of electromagnetic radiation is presented as claimed in claim 1.

A grid, particularly a two-dimensional grid having focused channels, requires spatially rather complex structures. The channels could, e.g., have a rectangular or hexagonal inner shape, which requires channel walls having different angulations. Such structures cannot be manufactured e.g. by simple meshing of metal sheets. It is hence beneficial if at least one structural element of the grid is made by a selective laser sintering technique from an essentially radiation-opaque powder material. As grids are used for various radiation energies, it depends on the application and on the structure size (e.g. the thickness of the radiation absorbing channel walls) whether the powder material can be considered as essentially radiation opaque. In mammography applications, X-ray energies of about 20 keV are used. For these energies, copper (Cu) can be considered as essentially radiation opaque, which means that grid walls fulfilling the requirements of certain geometry parameters, like wall thickness (e.g. 20 µm), channel height (e.g. 2 mm) etc. lead to absorption of the kind of radiation that is to be selectively absorbed, so that a noticeable improvement of a quality parameter of the radiation detection occurs. A quality parameter may be the scatter radiation-to-primary radiation ratio (SPR), the signal-to-noise ratio (SNR) or the like.

For CT applications in the range of e.g. 120 keV, molybdenum (Mo) or other refractory materials (e.g. tungsten) can be considered as essentially radiation opaque, but other materials like copper or titanium are likewise essentially radiation opaque if the structure is made in the appropriate thickness. Consequently, the material powder is to be considered as radiation opaque if the resulting grid has satisfying selective radiation transmission properties. Clearly, pure plastic materials are to be considered as radiation transparent for all ranges of medically relevant X-ray energies - an improvement of a quality parameter of the radiation detection would only hardly be noticeable. Metal powder-filled plastic, however, is to be considered radiation opaque (provided that the powder content is sufficiently high). As the sintered structure is directly made from a radiation-opaque material, the required radiation-absorption properties are inherent to this sintered structure. Any additional coating step is not required, in contrast to the laser-sintered plastic structures as known from U.S. patent No. 6,980,629 B1.

According to a feature of the invention, structural elements are formed by metal sheets and the sintered element extends at least between two of the metal sheets. For example, in a 2D ASG with rectangular channels, the channel walls in one direction can be formed by planar metal sheets (likewise made from a radiation-opaque material such as a refractory metal). The channel walls in the second direction can then be added by selectively laser sintering structures that extend between the metal sheets in the appropriate orientation, so that focused channels result. In the context of the present description, metal sheets should not only include planar metal sheets which extend in a plane, but also preformed metal sheets, which are preformed by e.g. pressing, punching, stamping, deep drawing, milling, eroding, etching or the like.

According to the invention, the metal sheets have holes through which the sintered structure extends. This is beneficial for the structural integrity of the grid, as the sintered structure does not only need to adhere to the metal sheet surface.

The invention also concerns a grid arrangement that is assembled from grids according to the invention; such grids particularly can have different geometric properties. Even though selective laser sintering of structures allows for a large design freedom, it may nevertheless be efficient to manufacture the grids with a certain maximum size and a given geometry that does not change too strongly over the grids' extension. In a grid arrangement, where various grids are assembled side-by-side, matrix-like or on top of each other, grids of different geometries can complement each other to achieve the overall grid performance. For example, in a CT scanner it may be cost-efficient to have high grids in the centre and lower grids at the edges, as the maximum relative scatter radiation content will appear in the central region of the X-ray beam where the object usually is thickest and primary radiation is reduced most.

In another aspect of the invention, a medical imaging device is presented in which a grid or grid arrangement according to the invention is comprised. Medical imaging devices that benefit from a grid according to the invention comprise e.g. X-ray devices - including mammography devices -, CT scanners, SPECT devices, and PET scanners.

To better address one or more of the above mentioned concerns, in another aspect of the invention, a method of manufacturing a grid for selective transmission of electromagnetic radiation is provided as claimed in claim 4. The method comprises the step of growing at least a structural element by means of selective laser sintering from a powder material, particularly a powder of an essentially radiation-opaque material. The structural element does include the full grid as well. As selective laser sintering allows for a large design freedom, it can be efficient to build the whole grid by selective laser sintering.

The method comprises the additional step of positioning a metal sheet on which the structural element is to be grown. As has been said above, in a grid, structures may occur that extend in a plane; a planar metal sheet can realize such structures. A pre-shaped metal sheet can also form more complex structures. This allows even faster and cheaper manufacturing of the grid, as the sintering step need not include the formation of the structure that is formed by the metal sheet.

The sintering step includes generating alignment structures. Alignment structures can be used for aligning the grid with other elements of a device in which the grid is to be integrated, e.g. the grid could be aligned with the radiation detection device so that the transmission channels geometrically coincide with single detection elements (detector pixels) or so that Moiré-effects are avoided. Alignment structures can further be used for positioning a metal sheet on the sintered structure. To aid the precise positioning of a metal sheet, the sheet has holes or cavities that mesh with the sintered alignment structures.

The method further comprises positioning an additional metal sheet on the sintered element wherein the metal sheets have holes through which the sintered element extends.

In a preferred method according to the invention, the step of positioning a metal sheet and the sintering step are repeated and the last step is either a sintering step or a step of positioning a metal sheet. In order to manufacture a complex structured grid, several metal sheets can be used. Before a new sheet is positioned, additional sintered structures are formed (e.g. with alignment structures to aid the precise positioning of a next metal sheet).

Summarizing, the present disclosure concerns a grid for selective transmission of electromagnetic radiation, particularly X-ray radiation, that has at least one structural element that was built by means of selective laser sintering of an essentially radiation-opaque powder material, and it also discloses a method of manufacturing a grid for selective transmission of electromagnetic radiation that comprises the step of growing at least a structural element by means of selective laser sintering from an essentially radiation-opaque powder material. Having a structural element that is built by selective laser sintering, the grid can be a highly complex 3D structure that is not achievable by molding or milling techniques. The sintered structure engages through ho les in metal sheets.

These and other aspects of the invention will be apparent from, and further elucidated by, a detailed discussion of exemplary embodiments, in which reference is made to the accompanying Figures. In the Figures
- Fig.1: shows a comb-like grid structure that has one base sheet and several sintered comb structures on which alignment structures are formed;
- Fig. 2: shows the comb structure of Fig. 1 but with an additional sheet arranged on the sintered structures;
- Fig. 3: shows the structure of Fig. 2 with additional sintered structures;
- Fig. 4: shows one embodiment of a grid according to the invention;
- Fig. 5: shows a grid arrangement of various grids having different geometric properties; and
- Fig. 6: shows an example of a medical imaging device in which a grid invention is used. according to the

In U.S. patent No. 6,980,629 B1, it is described to use a rapid prototyping technique to manufacture a radiation-transparent base body by layer-by-layer solidification of a structural material that is subsequently coated with an X-ray opaque material. This technique has the disadvantage that transparent walls are formed that do not contribute to the absorption efficiency of the grid and the need for a coating step.

In U.S. Patent No. 6,363,136 B1, it is described to manufacture a 2D ASG by co-assembling comb-structured elements and metal sheets. This also requires the step of manufacturing the comb structures by e.g. milling, high-pressure sintering or injection moulding, and furthermore it requires the step of assembling a large amount of grid elements, namely combs or double-combs and metal sheets.

Selective laser sintering (SLS) has been known for some time. In SLS a powder material is sintered together using a fine laser beam of appropriate energy. The object to be made is sintered layer by layer and the resulting object is subsequently immersed in the powder material so that a next layer of powder material can be sintered on top of the already sintered structures. In this way, rather complex three-dimensional structures can be formed, e.g. having cavities, combinations of convex and concave structural elements, etc.

In U.S. patent No. 6,363,136 B1, it is proposed to manufacture comb-like structures that are used to assemble a 2D ASG by traditional sintering techniques using high pressure and heat, but this has the disadvantage that it causes shrinkage during the sintering process and that traditional sintering is restricted to structures for which a negative for pre-forming before the actual sintering step can be made. Here, it is proposed to use selective laser sintering of a metal powder material to manufacture grids for selective radiation transmission, particularly 2D ASG.

Selective laser sintering allows generating fine structures from e.g. molybdenum powder by selectively illuminating the top powder layer with a high-intensity laser beam. The grain size of the metal powder can be chosen according to the required structure size and surface roughness. Typical structure sizes (channel wall thickness) for e.g. CT grids are about 50 - 300 µm, hence grain sizes of about 1 - 10 µm suffice (usually metal powders are provided with a Gaussian or similar distribution of grain sizes - if there are too many grains with too large a size present to assure a certain wall smoothness, these large diameter grains can be separated e.g. by sieving). For PET/SPECT devices, typical structure sizes (channel wall thickness) are about 200 - 1000 µm, so that grain sizes of about 5 - 50 µm suffice. For regular X-ray applications, typical structure sizes are about 10 - 50 µm, so that grain sizes of about 0.1 - 5 µm suffice. The above numbers are only exemplary and not to be understood as limiting the scope of the invention.

In one exemple, the 2D ASG is completely made by SLS. This allows a large design freedom. For example, the channel walls can be made thicker at the bottom of the grid, which bottom is to be positioned proximate to the radiation detection device, and thinner at the top of the grid, which top is to face the radiation source. The grid surface can be made curved, e.g. spherically shaped. Such design freedom is unknown from other techniques.

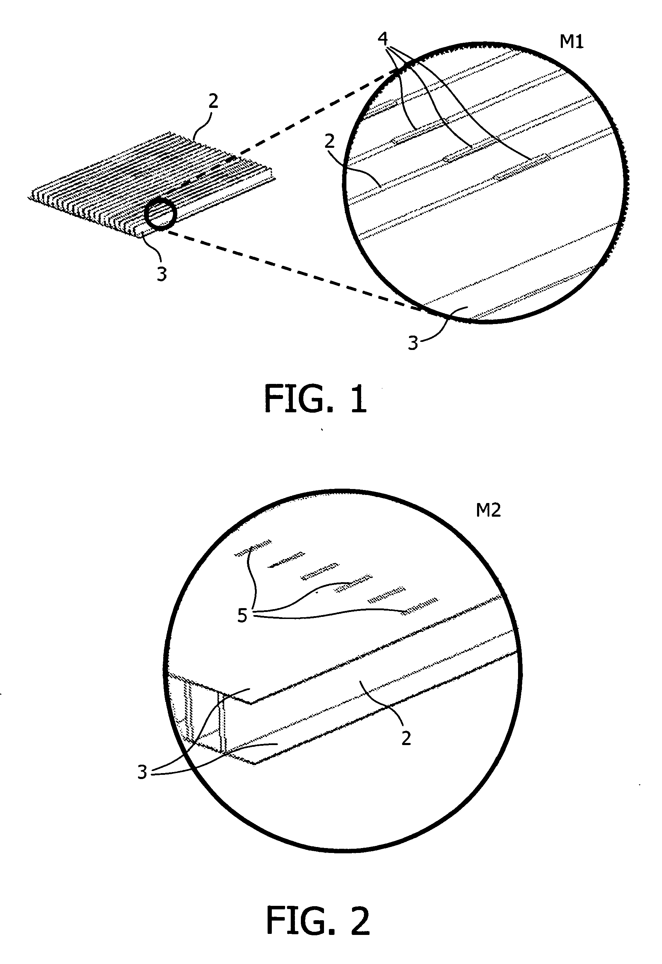

An embodiment of a method of manufacturing a grid according to the invention will be described with reference to Figs. 1 - 3. In a first step, a metal sheet (e.g. made from molybdenum or tungsten) is positioned in a working chamber of the SLS device. The precise positioning with respect to the position of the laser beam is achieved by a previous system calibration. The metal sheet can e.g. be reversibly glued in the working chamber for fixation. After a layer of metal powder is arranged on the metal sheet, SLS is used to sinter a first layer of sintered structures. After the first layer is completed, a next layer of metal powder is arranged on top of the metal sheet and sintered structures. This can be combined with a slight tilt of the working chamber, so that the next layer that is sintered has a given angulation with respect to the metal sheet.

Fig. 1 shows on the left hand side a comb-like grid structure that results after several layers of metal powder have been sintered. On the right hand side of Fig. 1, a magnification M1 of a portion of the comb-like structure as indicated by the circle on the left hand side of Fig. 1 is shown. The comb-like structure has a base that is formed by a metal sheet 3, particularly a molybdenum sheet. Sintered structures 2 are shown that extend over the length of the metal sheet 3. In the magnification M1 of the comb-like structure, alignment structures 4 are depicted.

Fig. 2 shows a magnified portion M2 as was shown on the right hand side of Fig. 1, but after an additional metal sheet 3 has been positioned on top of the sintered structures 2. The metal sheet 3 has holes 5 that are used for precise positioning of the metal sheet. The alignment structures 4 as shown in Fig. 1 engage in the holes 5 of the metal sheet, which enables precise positioning. In other exemplary embodiments of grids, alignment structures 4 are formed that are used for external positional reference, e.g. for positioning the grid precisely on a radiation-sensitive detector so that the channels geometrically coincide with detection elements of the detector.

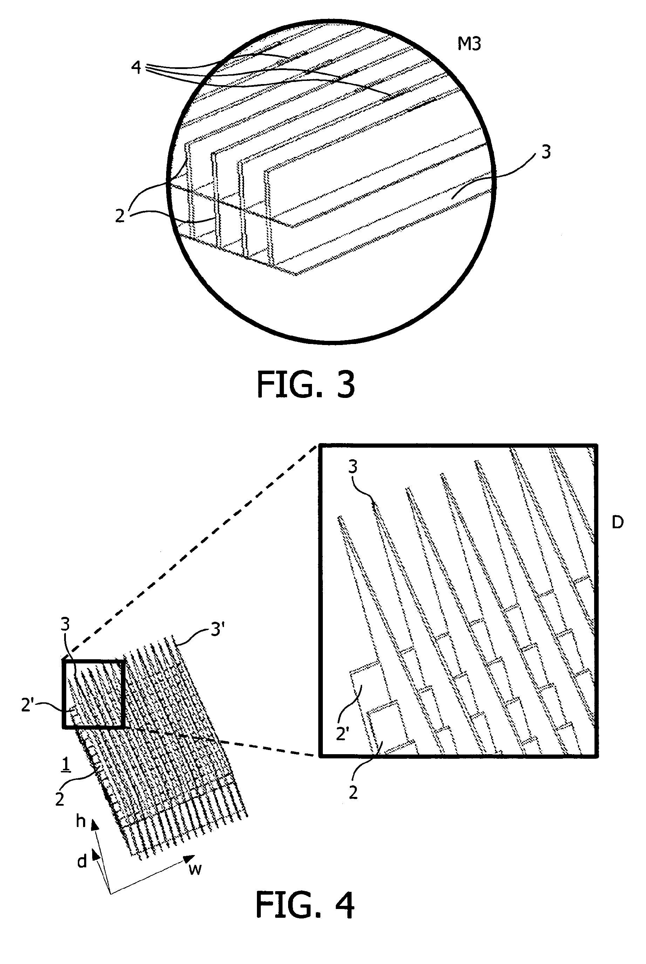

Fig. 3 shows a magnified portion M3 of a double-decker comb-like structure after an additional step of generating sintered structures 2. The sintered structures 2 again have alignment structures 4, so that a larger-sized grid can be manufactured by successive repetition of the steps of positioning a metal sheet 3 and sintering structures 2 on the metal sheet 3. It is dependent on the specific design of the final grid whether the last step is a step of positioning a metal sheet or a step of sintering structures. Laser welding can be used to fixedly connect a metal sheet with the sintered structures.

The final grid that results from a successive repetition of the described steps does not need to be supported by a frame structure as described e.g. in U.S. patent No. 6,363,136 B1, but is self-supporting.

The discussed manufacturing process is only exemplary and does not impose any design restrictions. The inventive method can be used to generate any other grid geometry obvious to the skilled person. Specifically, it is neither necessary that the metal sheet extends over the full size of the grid nor that the sintered structures extend over the full length of the metal sheet. It is also possible to use pre-formed metal sheets instead of flat metal sheets.

Another exemplary embodiment of a grid I according to the invention is shown on the left hand side of Fig. 4. On the right hand side of Fig. 4, a magnification D of a detail of a portion of the grid 1 as indicated by the rectangle on the left hand side is shown. In this embodiment, the grid consists of metal sheets 3, 3' and of sintered structures 2, 2' that have been manufactured in a method as described with reference to Figs. 1 - 3, but the sintered structures 2, 2' do not extend over the full length of the metal sheets 3, 3' but are considerably shorter. Further, on the right hand side of the grid 1, a metal sheet 3' terminates the grid and on the left hand side of the grid 1, a sintered structure 2' terminates the grid at least at about half of its height, whereas on the other two sides (both visible in Fig. 4) open channels are formed by metal sheets 3 and sintered structures 2. This allows for a matrix-like, periodic arrangement of grids 1. In case the grid 1 has a width w and depth *d* of 20 mm, respectively, (and a height *h* of 40 mm of the metal sheets and of 20 mm of the sintered structures), a detector of 1000 mm x 200 mm can be covered by a 100 x 20 matrix arrangement of grids.

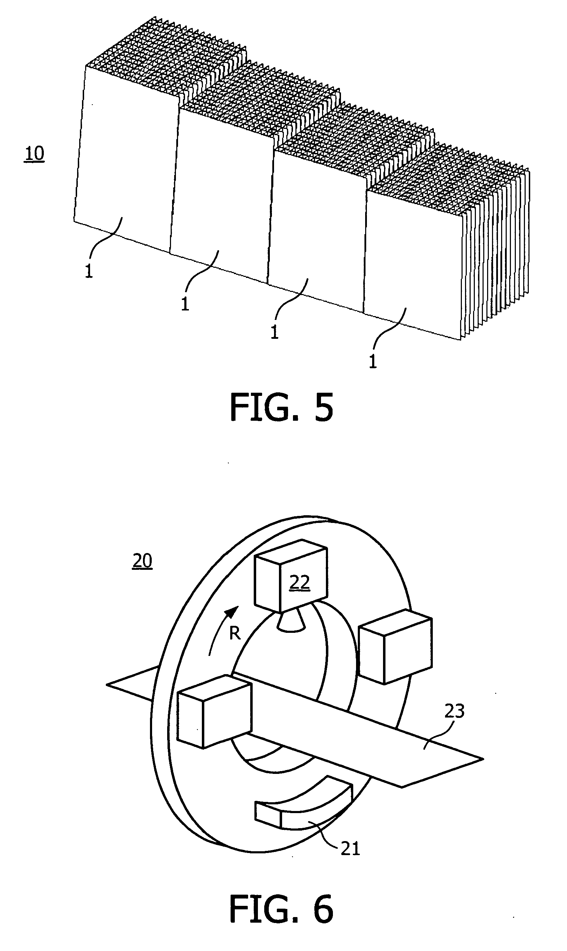

Fig. 5 shows an exemplary linear grid arrangement 10 of grids 1 that have different design parameters. In this grid arrangement 10, the leftmost grid 1 is the highest grid and the rightmost grid 1 is the lowest grid. The four grids shown of the grid arrangement differ in height. It is obvious to the skilled person that also a matrix-like grid arrangement can be formed from grids of various heights. In such a way, a grid arrangement can be formed where the central grids are highest and the grids at the edges are lowest, depending on the expected amount of scatter radiation that needs to be reduced by the grids. As lower grids are obviously cheaper than higher grids, such a grid arrangement provides for a low-cost grid arrangement. Instead of only modifying the height of the grids, it is also possible to arrange grids that have a curved top surface, so that a total grid arrangement is formed that has a (convex or concave) spherical surface. Likewise, the grids could change with respect to other design parameters, e.g. the centre grids can have channel walls that have the same height in both directions, whereas edge grids can have channel walls that are higher in one direction than in the other. Other design parameters include wall thickness, material, width of the grid, depth of the grid, channel size, channel form etc. Changes in these and other design parameters obvious to the skilled person can of course also be combined.

In Fig. 6, an example of a medical imaging device 20 is shown. Fig. 6 shows the main features of a CT scanner, namely an X-ray source 22, a radiation detection device 21 and a patient couch 23. The CT scanner rotates around the object (not shown) to be placed on the patient couch 23 and acquires projection images by means of the radiation detection device 21, as is known in the art. A grid or grid arrangement according to the invention can be used in the radiation detection device 22 to reduce the amount of scatter radiation generated in the illuminated object.

While the invention has been illustrated in the drawings and described in detail in the foregoing description, said illustration and description are to be considered as illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. Two-dimensional grid (1) having focused channels for selective transmission of electromagnetic radiation that comprises at least one structural element (2) that was built by means of selective laser sintering of an essentially radiation-opaque powder material, wherein structural elements of the grid are formed by metal sheets (3) and the sintered element (1) extends at least between two of the metal sheets (3), **characterised in that** the metal sheets (3) have holes (5) through which the sintered element (2) extends.

2. Grid arrangement (10) that is assembled from several grids (1) according to claim 1.

3. Medical imaging device (20) wherein a grid according to claim 1 or a grid arrangement according to claim 2 reduces the amount of scatter radiation.

4. Method of manufacturing a two-dimensional grid (1) having focused channels for selective transmission of electromagnetic radiation that comprises the following steps:
- providing a metal sheet (3);
- growing at least one structural element (2) on the metal sheet (3) by means of selective laser sintering from an essentially radiation-opaque powder material
- positioning an additional metal sheet (3) on the sintered element (2), **characterised in that** the metal sheets (3) have holes (5) through which the sintered element (2) extends.

5. Method according to claim 4, wherein the step of positioning a metal sheet (3) and the sintering step are repeated, and the last step is either a sintering step or a step of positioning a metal sheet (3).

## Patentansprüche

1. Zweidimensionales Gitter (1) mit fokussierten Kanälen zur selektiven Übertragung von elektromagnetischer Strahlung, das mindestens ein Strukturelement (2) umfasst, welches mit Hilfe von selektiver Lasersinterung eines im Wesentlichen strahlenundurchlässigen Pulvermaterials gebildet wurde, wobei Strukturelemente des Gitters durch Metallbleche (3) geformt sind und das gesinterte Element (1) mindestens zwischen zwei der Metallbleche (3) verläuft, **dadurch gekennzeichnet, dass** die Metallbleche (3) Löcher (5) haben, durch die das gesinterte Element (2) verläuft.

2. Gitteranordnung (10), die aus mehreren Gittern (1) nach Anspruch 1 zusammengesetzt wird.

3. Medizinische Bildgebungsvorrichtung (20), wobei ein Gitter nach Anspruch 1 oder eine Gitteranordnung nach Anspruch 2 das Maß an Streustrahlung reduziert.

4. Verfahren der Herstellung eines zweidimensionalen Gitters (1) mit fokussierten Kanälen zur selektiven Übertragung von elektromagnetischer Strahlung, wobei das Verfahren die folgenden Schritte umfasst:
- Schaffen eines Metallblechs (3);
- Aufwachsen von mindestens einem Strukturelement (2) auf das Metallblech (3) mit Hilfe von selektiver Lasersinterung aus einem im Wesentlichen strahlenundurchlässigen Pulvermaterial;
- Positionieren eines zusätzlichen Metallblechs (3) auf dem gesinterten Element (2), **dadurch gekennzeichnet, dass** die Metallbleche (3) Löcher (5) haben, durch die das gesinterte Element (2) verläuft.

5. Verfahren nach Anspruch 4, wobei der Schritt des Positionierens eines Metallblechs (3) und der Sinterungsschritt wiederholt werden, und der letzte Schritt entweder ein Sinterungsschritt oder ein Schritt des Positionierens eines Metallblechs (3) ist.

## Revendications

1. Grille bidimensionnelle (1) ayant des canaux concentrés pour la transmission sélective d'un rayonnement électromagnétique qui comprend au moins un élément structural (2) qui a été construit par frittage laser sélectif d'un matériau de poudre sensiblement opaque au rayonnement, dans laquelle les éléments structuraux de la grille sont formés de tôles métalliques (3) et l'élément fritté (1) s'étend au moins entre deux des tôles métalliques (3), **caractérisée en ce que** les tôles métalliques (3) ont des trous (5) à travers lesquels s'étend l'élément fritté (2).

2. Agencement de grilles (10) qui est assemblé à partir de plusieurs grilles (1) selon la revendication 1.

3. Dispositif d'imagerie médicale (20), dans lequel une grille selon la revendication 1 ou un agencement de grilles selon la revendication 2 réduit la quantité de rayonnement dispersé.

4. Procédé de fabrication d'une grille bidimensionnelle (1) ayant des canaux concentrés pour la transmission sélective d'un rayonnement électromagnétique qui comprend les étapes suivantes :
- fournir une tôle métallique (3) ;
- former au moins un élément structurel (2) sur la tôle métallique (3) par frittage laser sélectif d'un matériau de poudre sensiblement opaque au rayonnement ;
- positionner une autre tôle métallique (3) sur l'élément fritté (2), **caractérisé en ce que** les tôles métalliques (3) ont des trous (5) à travers lesquels s'étend l'élément fritté (2).

5. Procédé selon la revendication 4, dans lequel l'étape de positionnement d'une tôle métallique (3) et l'étape de frittage sont répétées, et la dernière étape est soit une étape de frittage soit une étape de positionnement d'une tôle métallique (3).
